# EUROPÄISCHE PATENTANMELDUNG

(11) **EP 0 649 712 A1**
(43) Veröffentlichungstag der Anmeldung: **26.04.1995**
(21) Anmeldenummer: 93116989.0
(22) Anmeldetag: 20.10.1993
(51) Int. Cl.: B26F 3/00

(54) **Wasserstrahl-Schneidewanne**

(71) Anmelder: FORACON MASCHINEN- UND ANLAGEN GmbH, D-75015 Bretten (DE)
(72) Erfinder: Doll, Friedbert, D-75015 Bretten (DE)
(74) Vertreter: Alber, Norbert

(57) **Zusammenfassung**

Zur Reduzierung des Herstellungsaufwandes und der Herstellungskosten ist die Wasserstrahl-Schneidewanne (1) für eine Wasserstrahl-Schneideanlage, die mit Abstützelementen (3, 4) zur Aufnahme einer Werkstückablage und der eigentlichen Schneideeinrichtung, mit einem Ablaß (6) für das Schneidewasser und mit einem in Richtung auf den Schneidewasserablaß (6) geneigten Schneidewannenboden ausgestattet ist, aus insbesondere hochverdichtetem Rüttelbeton, vorzugsweise mit Stahlarmierungen (2) hergestellt. Dadurch läßt sich die Wanne (1) samt allen zugehörigen Anschlüssen in einem einzigen Arbeitsgang ohne Nachbearbeitung funktionsgerecht und funktionsbereit herstellen.

## Beschreibung

Die Erfindung betrifft eine Wasserstrahl-Schneidewanne für eine Wasserstrahl-Schneideanlage, wobei die Schneidewanne ausgestattet ist mit Abstützelementen zur Aufnahme einer Werkstückablage, mit Abstützelementen zur Aufnahme der eigentlichen Schneideeinrichtung und gegebenenfalls deren Hilfsaggregaten, mit einem Ablaß für das Schneidewasser im Bodenbereich der Schneidewanne und mit einem in Richtung auf den Schneidewasserablaß geneigten Schneidewannenboden.

Derartige Schneidewannen werden bei Wasserstrahl-Schneideanlagen zum Auffangen des Schneidewassers, das mit hohem bis höchstem Druck aus der eigentlichen Schneideeinrichtung austritt und nach Durchdringung des zu bearbeitenden Werkstücks unterseitig desselben zum Auffangen ansteht. Dabei muß das Schneidewasser nicht nur aufgefangen werden, sondern wegen des hohen bzw. höchsten Drucks muß in der Schneidewanne ein verhältnismäßig hoher Wasserstand aufrechterhalten werden, um die im Schneidewasserstrahl enthaltene Restenergie zu vernichten, die ansonsten den Schneidewannenboden durchtrennen könnte. Die Schneidewannen für Wasserstrahl-Schneideanlagen sind daher zumindest in der Regel mindestens 0,8 m hoch. Darüber hinaus muß die Schneidewanne in Hinblick auf die größte Größe eines zu bearbeitenden Werkstücks in Breitenrichtung und Längenrichtung bemessen und in der Lage sein, auf dieser verhältnismäßig großen Flächenerstreckung ein zu bearbeitendes Werkstück tragen zu können und die eigentliche Schneideinrichtung nicht nur lagern, sondern auch stabil geführt bewegen zu können, wozu bisher noch ein besonderes Führungsgestell erforderlich ist. Diese Grunderfordernisse machen es notwendig, daß bei den bisher als Stahlkonstruktion hergestellten Schneidewannen ein verhältnismäßig großer Konstruktions- und Bauaufwand betrieben werden muß. Die in der Regel als Schweißkonstruktion ausgeführten Schneidewannen müssen nach ihrer Errichtung und der Anbringung der Abstützelemente für die diversen Einrichtungen spanabhebend exakt nachgearbeitet und beschliffen werden. Im übrigen müssen in den Abstützelementen Löcher gebohrt und Gewinde geschnitten werden, um beispielsweise die eigentliche Schneideinrichtung einschließlich ihrer Hilfsaggregate wie beispielsweise Führungsschienen, Antriebsteile ect. exakt an der Wanne anbringen zu können. Diese Nacharbeitung der Schneidewanne nach ihrer Erstellung als Schweißkonstruktion ist angesichts der erheblichen Größe derartiger Schneidewannen mit sehr erheblichen Kosten verbunden, die einen nicht unerheblichen Anteil der Gesamtkosten einer Wasserstrahl-Schneideanlage ausmachen und daher auch deren Betriebskosten entsprechend beeinflussen.

Der Erfindung liegt daher die Aufgabe zugrunde, eine Wasserstrahl-Schneidewanne zu schaffen, die wie bisher alle an eine solche Wanne zu stellenden Forderungen erfüllt, aber zu erheblich geringeren Kosten herstellbar ist und ferner das bisher vorzusehende Führungsgestell ersetzt, auf das die Führungselemente der Schneideeinrichtung aufgeschraubt werden.

Diese Aufgabe wird erfindungsgemäß dadurch gelöst, daß die Schneidewanne in Abkehr von der bisherigen Bauweise aus Beton hergestellt ist. Dabei kommt insbesondere und in vorteilhafter Weiterbildung eine Herstellung aus Rüttelbeton und insbesondere aus hochverdichtetem Rüttelbeton in Betracht. Ebenfalls vorteilhaft ist eine Ausführungsform, bei die die Schneidewanne aus Beton mit Stahlarmierungen besteht.

Eine Schneidewanne aus Beton einschließlich der vorstehend ebenfalls bereits genannten vorteilhaften Weiterbildungen ist im Gegensatz zu einer Stahlkonstruktion und insbesondere einer Schweißkonstruktion erheblich preiswerter herzustellen. Die Wanne kann nämlich praktisch problemlos als einstückiger Formkörper in einem einzigen Arbeitsgang abschließend hergestellt werden. Probleme wie das Verziehen von Stahlplatten während der Durchführung von Schweißarbeiten und von evtl. Leckagen infolge mangelhafter Verschweißung sind durch die erfindungsgemäße Bauweise von Haus aus ausgeschaltet.

Daß Schneidewannen bisher ausschließlich als Stahlkonstruktion ausgebildet worden sind, geht wohl in erster Linie darauf zurück, daß im Maschinen- und Anlagenbau die eigentlichen Maschinenteile - und eine Schneidewanne stellt ein eigentliches Maschinenteil einer Schneideanlage dar - stets als Metallteile ausgebildet werden. Die Verarbeitung von Beton ist dem Maschinen- und Anlagenbau, betreffend eigentliche Maschinenteile, völlig fremd. Beton wird im Anlagenbau lediglich zur Erstellung von Fundamenten und zugehörigen Gebäuden verwendet.

Für die Abstützelemente zur Aufnahme der Werkstückablage bzw. der eigentlichen Schneideeinrichtung sowie gegebenenfalls deren Hilfsaggregate kommt in vorteilafter Weise in Betracht, diese als in dem Beton der Schneidewanne eingegossene Elemente und damit als integrierte Bestandteile der Beton-Schneidewanne auszubilden. Entsprechende Abstützelemente können an der Form zur Herstellung der Beton-Schneidewanne angebracht werden, und zwar derart, daß sie nach dem Betongießen in den Beton unverlierbar und unverrückbar eingelassen sind. Die Abstützelemente nehmen dann eine Position ein, die die lagegerechte Anordnung von Werkstückablagen und dergleichen gestattet, ohne daß eine Nachbearbeitung der Schneidewanne erforderlich ist.

In Hinblick auf die Formstabilität der Beton-Schneidewanne kommt insbesondere bei großräumigen Wannen eine Ausstattung derselben mit Stahlarmierungen in Betracht, wobei diese mit den bereits genannten Abstützelementen unmittelbar fest verbunden sind. Auf die Abstützelemente einwirkende äußere Kräfte werden also über die Stahlarmierung in den Beton eingeleitet und dort verhältnismäßig gleichmäßig verteilt.

Auch für den Ablaß für das Schneidewasser sowie gegebenenfalls vorzusehende Zu- und Ablauföffnungen für Spülwasser sollte vorteilhafterweise vorgesehen werden, diese je samt zugehörigem Anschlußstutzen als in dem Beton der Schneidewanne eingegossene Elemente und damit als integrierte Bestandteile der Beton-Schneidewanne auszubilden. Damit entfällt dann auch in diesem Bereich jegliche Nachbearbeitung der Wanne.

Um dem in der Wanne aufgenommenen Wasser eine bestimmte Strömungsrichtung zu verleihen, damit das Wasser die beim Wasserstrahlschneiden angefallenen Partikel des geschnittenen Werkstücks sowie etwaige Abrasivteile des Schneidewassers auffangen und abführen zu können, war es bisher bei als Stahlkonstruktion ausgebildeten Schneidewannen üblich, einen verhältnismäßig großen Aufwand betreiben zu müssen, wobei der dann entsprechend ausgebildete Wannenboden häufig sogar noch mit hochfesten Keramikplatten ausgekleidet werden mußte. Ein solcher Aufwand und eine solche Auskleidung sind bei einer erfindungsgemäßen, nämlich aus Beton bestehenden Schneidewanne nicht notwendig. Es reicht hier aus, dem Boden über die zugehörige Gußform eine bestimmte Gestaltung zu geben.

Auch von der Unterseite des Schneidewannenbodens aus zugängliche Aufnahmeelemente für Schwingungsdämpfer und dergleichen sollten als in den Beton der Schneidewanne eingegossene Elemente und damit integrierte Bestandteile der Beton-Schneidewanne ausgebildet werden, so daß auch in Hinblick auf diese Aufnahmeelemente keinerlei Nachbearbeitung der Wanne notwendig ist.

Da leider auch eine Beton-Schneidewanne analog zu einer als Stahlkonstruktion ausgebildeten Schneidewanne ein erhebliches Gewicht hat, kommt in der Regel nur ein Transport mit besonderen Hebeeinrichtungen in Betracht. Hierfür sind am Oberseitenrand der Schneidewanne anzusetzende Halterungen bereits bisher üblich. Sie werden dabei bisher entweder im Bedarfsfall angeschraubt oder von Haus aus angeschweißt. Bei der erfindungsgemäßen Schneidewanne bietet sich die Möglichkeit, entsprechende Halterungen ebenfalls als in dem Beton der Schneidewanne eingegossene Elemente und damit integrierte Bestandteile der Beton-Schneidewanne auszubilden.

Schließlich sollten zur Verbesserung der Zugänglichkeit der Abstützelemente zur Aufnahme einer Werkstückablage und/oder der eigentlichen Schneideeinrichtung oder etwaiger Hilfsaggregate die Abstützelemente nicht nur als integrierte Bestandteile der Beton-Schneidewanne ausgebildet werden, sondern sollte die Beton-Schneidewanne im Bereich dieser Abstützelemente Absätze in der Wannenwandung aufweisen, wobei die Abstützelement im Oberflächenbereich dieser Absätze einzulassen sind. Auf diese Weise ist eine besonders günstige Einleitung der von den Abstützelementen und dergleichen stammende Lasten in den Betonkörper möglich.

Die erfindungsgemäß ausgebildete Schneidewanne ist in ihrer Grundkonzeption sowie in ihren vorstehend im einzelnen angesprochenen vorteilhaften Weiterbildungen ein Bauteil einer gesamten Wasserstrahl-Schneideanlage, das gegenüber der bisherigen Ausführungsform erheblich preiswerter herstellbar ist, und zwar sowohl hinsichtlich der eigentlichen Erstellungsarbeit als auch der Nachbearbeitungsarbeit. Kalkulationen haben gezeigt, daß durch die erfindungsgemäße Gestaltung die angesprochenen Kosten in der Regel sicherlich unter 20 % der bisherigen Kosten liegen. Im übrigen bedarf es wohl praktisch überhaupt keiner Pflegearbeiten während des Betriebs, da Beton gegenüber den im Schneidewasser enthaltenen abrasiven Partikeln als ohne weiteres resistent zu gelten hat. Im Gegensatz hierzu muß eine als Stahlkonstruktion aufgebaute Schneidewanne entweder aus rostfreiem Stahl hergestellt oder rostschutzbehandelt werden, damit nicht eines Tages Leckagen auftreten.

Nachfolgend wird die Erfindung weiter ins einzelne gehend unter Bezugnahme auf die Zeichnung ausschließlich beispielhaft beschrieben; in der Zeichnung zeigen:
- Fig. 1: einen Querschnitt durch eine erfindungsgemäße Beton-Schneidewanne und
- Fig. 2: einen Längsschnitt durch dieselbe.

Die hinsichtlich Größe und im wesentlichen auch ihrer Außenabmessungen einer herkömmlichen Schneidewanne entsprechende erfindungsgemäße Beton-Schneidewanne 1 besteht, wie ohne weiteres bereits aus ihrer Bezeichnung ersichtlich ist, aus Beton, d.h. ihr Boden und ihre Seitenwände bestehen aus Beton. Als Beton kommt dabei insbesondere hochverdichteter Rüttelbeton in Betracht.

In den Beton sind Stahlarmierungen 2 eingelegt. Weiter sind im Oberflächenbereich des Betons der Schneidewanne 1 Abstützelemente 3 bzw. 4 für gegebenenfalls unterschiedliche Einrichtungen vorgesehen, beispielsweise zur Befestigung eines Motors oder von Führungen für die eigentliche Schneideinrichtung.

Diese Abstützelemente 3 bzw. 4 können ohne weiteres, wie im übrigen auch in der Zeichnung dargestellt ist, mit den Stahlarmierungen 2 fest verbunden sein.

In analoger Weise zu den Abstützelementen 3 bzw. 4 sind Öffnungen 5 als Ablaß für das Schneidewasser bzw. Zu- und Ablauf für Spülwasser samt zugehörigem Anschlußstutzen (nicht dargestellt) in den Beton der Schneidewanne 1 eingegossen und somit integrierter Bestandteil der Beton-Schneidewanne 1.

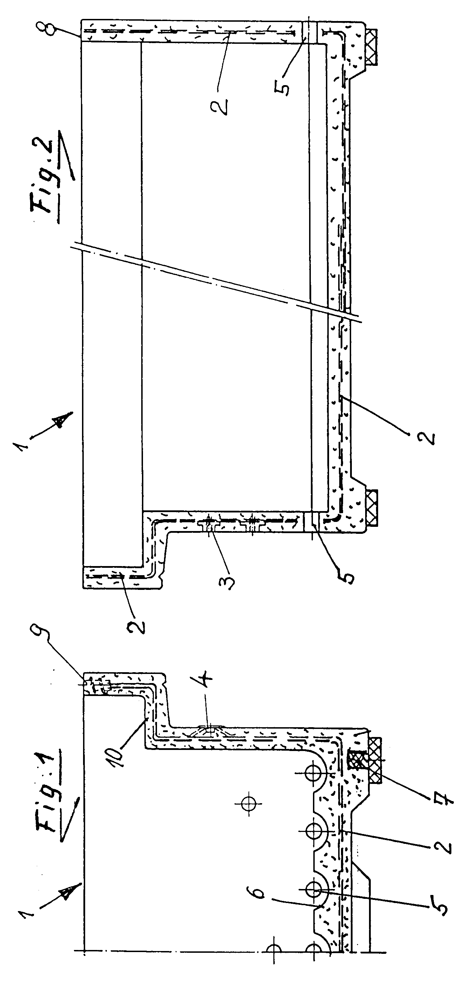

Auch ist, wie insbesondere aus Fig. 1 deutlich ersichtbar ist, der Schneidewannenboden 6 wellenförmig gestaltet, wobei eine Neigung in Richtung auf eine Ablaßöffnung für das Schneidewasser vorgesehen werden kann (nicht dargestellt).

An der äußeren Unterseite der Schneidewanne 1 sind von dort aus zugängliche Aufnahmeelemente 7 zur Fixierung der Schneidewanne 1 an Schwingungsdämpfern vorgesehen, wobei diese Aufnahmeelemente 7 wiederum in den Beton der Schneidewanne 1 eingegossen sind und damit integrierte Bestandteile der Beton-Schneidewanne 1 darstellen.

Am oberen Umlaufrand 8 der Schneidewanne 1 sind Halterungen 9 in den Beton der Schneidewanne 1 eingelassen, und zwar derart, daß diese Halterungen 9 analog zu den Abstützelementen 3,4 und den Aufnahmeelementen 7 jeweils einen integrierten Bestandteil der Beton-Schneidewanne 1 darstellen.

Im übrigen ist, wie aus Fig. 1 und Fig. 2 ersichtlich ist, die erfindungsgemäße Beton-Schneidewanne 1 innenseitig an einem Teil ihrer Umlaufwandung mit Absätzen 10 ausgestattet, und zwar durch entsprechende Formgebung des die Schneidewanne 1 bildenden Betons, wobei diese Absätze 10 der Ablage insbesondere eines zu bearbeitenden Werkstücks über eine Werkstückablage dienen. In die Absätze 10 können hierzu besondere Abstützelemente eingelassen sein, die wiederum integrierter Bestandteil der Wanne sind, und an denen beispielsweise die Werkstückablage fixiert werden kann. Anstelle der Werkstückablage kann selbstverständlich auch die Lagerung eines anderweitigen Bestandteils der Wasserstrahlschneideanlage in Betracht kommen.

Eine erfindungsgemäße Beton-Schneidewanne 1, wie sie beispielhaft in Fig. 1 und 2 dargestellt ist, läßt sich problemlos als Formstück aus Beton gießen und ist damit grundsätzlich sehr preiswert herstellbar. Da die üblicherweise notwendigen Anschlußelemente für die eigentliche Schneideeinrichtung, deren Antrieb, zur Lagerung von Werkstücken, zur Zu- und Abführung von Schneidewasser bzw. Spülwasser etc. wie angegeben in den Wannenkörper bei dessen Herstellung eingeformt bzw. eingegossen werden und damit integrierten Bestandteil des Wannenkörpers darstellen, entfällt auch jegliche Nacharbeitung des Wannenkörpers, so daß praktisch unmittelbar nach dem Aushärten des Betons eine betriebsbereite Schneidewanne zur Verfügung steht.

## Patentansprüche

1. Wasserstrahl-Schneidewanne für eine Wasserstrahl-Schneideanlage mit Abstützelementen zur Aufnahme einer Werkstückablage, mit Abstützelementen zur Aufnahme der eigentlichen Schneideeinrichtung und gegebenenfalls deren Hilfsaggregaten, mit einem Ablaß für das Schneidewasser im Bodenbereich der Schneidewanne und mit einem in Richtung auf den Schneidewasserablaß geneigten Schneidewannenboden, **dadurch gekennzeichnet,** daß die Schneidewanne (1) aus Beton hergestellt ist.

2. Schneidewanne nach Anspruch 1, **dadurch gekennzeichnet,** daß die Schneidewanne (1) aus insbesondere hochverdichtetem Rüttelbeton hergestellt ist.

3. Schneidewanne nach Anspruch 1 und/oder 2, **dadurch gekennzeichnet,** daß die Schneidewanne (1) aus Beton mit Stahlarmierungen (2) besteht.

4. Schneidewanne nach mindestens einem der Ansprüche 1 bis 3**, dadurch gekennzeichnet,** daß die Abstützelemente zur Aufnahme der Werkstückablage und/oder die Abstützelemente zur Aufnahme der eigentlichen Schneideeinrichtung sowie gegebenenfalls deren Hilfsaggregate als in den Beton der Schneidewanne (1) eingegossene Elemente (3, 4) integrierte Bestandteile der Beton-Schneidewanne (1) sind.

5. Schneidewanne nach Anspruch 3 und 4, **dadurch gekennzeichnet,** daß die Stahlarmierungen (2) mit den Abstützelementen (3, 4) zur Aufnahme der Werkstückablage und/oder der eigentlichen Schneideeinrichtung sowie gegebenenfalls deren Hilfsaggregate unmittelbar fest miteinander verbunden sind.

6. Schneidewanne nach mindestens einem der Ansprüche 1 bis 5, **dadurch gekennzeichnet,** die der Ablaßöffnung für das Schneidewasser sowie gegebenenfalls vorgesehene Zu- und Ablauföffnungen (5) für Spülwasser je samt zugehörigern Anschlußstutzen als in den Beton der Schneidewanne eingegossene Elemente integrierte Bestandteile der Beton-Schneidewanne (1) sind.

7. Schneidewanne nach mindestens einem der Ansprüche 1 bis 6, **dadurch gekennzeichnet,** daß der Schneidewannenboden (6) in Hinblick auf die gewünschte Strömungsrichtung des Schneidewassers im Bodenbereich wellenförmig gestaltet ist.

8. Schneidewanne nach mindestens einem der Ansprüche 1 bis 7, **dadurch gekennzeichnet,** daß von der Unterseite des Schneidewannenbodens aus zugängliche Aufnahmeelemente (7) für Schwingungsdämpfer als in den Beton der Schneidewanne (1) eingegossene Elemente integrierte Bestandteile der Beton-Schneidewanne (1) sind.

9. Schneidewanne nach mindestens einem der Ansprüche 1 bis 8, **dadurch gekennzeichnet,** daß am Oberseitenrand (8) der Schneidewanne (1) zum Ansetzen von Hebezeugen, Seilen, Ketten ect., vorgesehene Halterungen (9) als in den Beton der Schneidewanne eingegossene Elemente integrierte Bestandteile der Beton-Schneidewanne (1) sind.

10. Schneidewand nach mindestens einem der Ansprüche 1 bis 9, **dadurch gekennzeichnet,** daß die Beton-Schneidewanne (1) im Bereich ihrer Abstützelemente zur Aufnahme der Werkstückablage und/oder der eigentlichen Schneideeinrichtung sowie gegebenenfalls deren Hilfsaggrerate Absätze (10) in der Wannenwandung aufweist, wobei die Abstützelemente im Oberflächenbereich der Absätze (10) eingelassen sind.
